# EUROPÄISCHE PATENTANMELDUNG

(11) **EP 1 914 460 A2**
(43) Veröffentlichungstag der Anmeldung: **23.04.2008**
(21) Anmeldenummer: 07020399.7
(22) Anmeldetag: 18.10.2007
(51) Int. Cl.: F16K 37/00

(54) **Verfahren und eine Vorrichtung zur Prüfung der Funktionstüchtigkeit eines Ventilsystems**

(30) Priorität: 18.10.2006 DE 102006049706; 18.10.2006 DE 102006049705
(71) Anmelder: AREVA NP GmbH, 91052 Erlangen (DE)
(72) Erfinder: Conrads Hermann Josef, 91074 Herzogenaurach (DE); Leipold Gerhard, 91301 Forchheim (DE); Butkereit Werner, 91085 Weisendorf (DE); Maurer Tassilo, 91058 Erlangen (DE); Walcher Dorian, 85551 Kirchheim (DE)
(74) Vertreter: Tergau & Pohl Patentanwälte

(57) **Zusammenfassung**

Die Erfindung betrifft ein Verfahren und eine Vorrichtung zur Prüfung der Funktionstüchtigkeit eines Ventilsystems, insbesondere einer Steuereinheit (13) mit einem Druck-Weg-Umformer (16a,16b), wobei in dem Druck-Weg-Umformer eine Druckdifferenz zwischen zumindest zwei voneinander getrennten Druckräumen (18a bis 18c) in eine Bewegung eines Stellkörpers umsetzbar ist. Mit dem Stellkörper wird ein Steuerteil zum Ansteuern eines Sicherheitsventils (17) mit mindestens einem Druckraum zur Aufnahme eines in einem Druckbehälter unter Druck stehenden Kühlmittels ausgelöst. Mittels eines Druckminderers und eines Zusatzbehälters steuert eine Prüfeinheit automatisch den Systemdruck eines extern zugeführten Fluides innerhalb der Prüfeinheit und damit in den zu überprüfenden Komponenten der Steuereinheit, beispielsweise ein Druck-Weg-Umformer oder ein Sicherheitsventil, wobei mit Hilfe eines Messaufnehmers die relevanten Zustandsparameter protokolliert werden. Diese Daten können dann visualisiert und ausgewertet werden. Durch die selektive Druckbeaufschlagung von genau durch die Prüfeinheit ansteuerbaren Komponenten der Steuereinheit in Verbindung mit der Erzeugung eines definierten Druckes eines Fluides können eineindeutige Zuordnungen zwischen dem definierten Fluiddruck in der Steuereinheit und den gemessenen Zustandsparametern ermittelt und damit Rückschlüsse auf die Funktionstüchtigkeit der Steuereinheit gezogen werden.

## Beschreibung

Die Erfindung betrifft ein Verfahren und eine Vorrichtung zur Prüfung der Funktionstüchtigkeit eines Ventilsystems, insbesondere einer Steuereinheit mit einem Druck-Weg-Umformer, wobei in dem Druck-Weg-Umformer eine Druckdifferenz zwischen zumindest zwei voneinander getrennten Druckräumen in eine Bewegung eines Stellkörpers umsetzbar und mit dem Stellkörper ein Steuerteil zum Ansteuern eines Sicherheitsventils mit mindestens einem Druckraum zur Aufnahme eines in einem Druckbehälter unter Druck stehenden Kühlmittels auslösbar ist.

Insbesondere in Kernkraftwerken wird die Überdruckabsicherung der druckführenden Systeme durch Steuereinheiten realisiert. Für die Überdruckabsicherung des Primärkreises sind in der Regel gesteuerte Druckhaltesicherheitsventile im Einsatz. Die Sicherheitsventile sprechen bei einem definierten Überdruck eines flüssigen, eines dampfförmigen oder eines flüssig-dampfförmigen Reaktorkühlmittels im Reaktordruckbehälter an. Die Steuereinheiten arbeiten mit unterschiedlichen Funktionsweisen der Sicherheitsventile entweder nach dem Druckbe- oder nach dem Druckentlastungsprinzip. Federbelastete Sicherheitsventile arbeiten in der Regel nach dem Druckentlastungsprinzip, bei dem entweder eine vorgespannte Feder oder eine elektromagnetische Kraft gegen eine hydraulische Kraft wirkt, die sich aus dem Systemdruck des abzusichernden Kreislaufes und der beaufschlagten Querschnittsfläche - beispielsweise der Kolbenquerschnittsfläche des Sicherheitsventils - zusammensetzt. Zur Verbesserung der Sitzdichtheit von federbelasteten Sicherheitsventilen wird durch die gegen den Systemdruck wirkende Feder die Sitzpressung durch eine Zusatzbelastung erhöht, da bei steigendem Systemdruck die Flächenpressung am Sitz abnimmt.

So beschreibt die DE 196 28 610 C1 eine Steuereinheit mit einem Druck-Weg-Umformer, der mit einem Steuerventil zum Entlasten und damit zum Öffnen eines Sicherheitsventils verbunden ist. Gemäß der dortigen Erfindung ist vorgesehen, dass der Druck-Weg-Umformer mit einem Auffüllkegel und mit einem Entlastungskegel mechanisch in Verbindung steht. Dabei können beide Kegel in gleicher Richtung bewegt werden. Der Auffüllkegel kann durch eine relativ kleine Kraft gegen einen Sitz verschoben werden, wodurch eine Zuleitung von einem Kanal des Steuerventils abgesperrt wird. Nur durch eine relativ große Kraft kann danach der Entlastungskegel von seinem Sitz abgehoben werden, wodurch der Kanal des Steuerteils mit einer zur Umgebung offenen Ableitung verbunden wird. Es wird gemäß der dortigen Erfindung in zwei Schritten zunächst der Kanal von der Zuleitung getrennt und erst bei weiter gestiegenem Systemdruck der Kanal mit einer zur Umgebung offenen Ableitung verbunden.

Eine weitere Steuereinheit ist in der DE 198 24 494 C1 beschrieben. Gemäß der dortigen Steuereinheit ist zum Ansteuern eines Sicherheitsventils mittels eines Steuerteils ein Druck-Weg-Umformer eines Druckbehälters auslösbar. Ein erster Druckraum des Druck-Weg-Umformers ist über eine Drainageleitung mit einem Abblasetank verbunden. Durch eine der Drainageleitung zugeordnete Umschaltventileinrichtung wird bei einem Druck im Abblasetank oberhalb eines Grenzdruckes der Druckraum anstatt mit dem Abblasetank dann mit einer Abführleitung gekoppelt.

Aufgrund der hohen Sicherheitsrelevanz für den Betrieb des druckführenden Systems eines Kraftwerkes muss zu jedem Zeitpunkt die Funktionstüchtigkeit der Steuereinheit und insbesondere der Sicherheitsventile für die Überdruckregulierung gewährleistet sein. Aus diesem Grunde werden sämtliche Komponenten der Steuereinheit in regelmäßigen Zeitintervallen umfangreichen Funktionstüchtigkeitstests unterzogen, so dass hierdurch mögliche Funktionsbeeinträchtigungen der Steuereinheit frühzeitig erkannt und behoben werden können.

Bisherige Funktionstüchtigkeitstests zeichnen sich dadurch aus, dass mit einem relativ hohem Aufwand das Drucksystem der Steuereinheit überprüft wird, wobei das im System befindliche Kühlmittel mit einem nicht eindeutig zu bestimmenden Druck, insbesondere aufgrund des zumeist nicht eindeutig feststellbaren Aggregatzustandes des Kühlmittels, in dem Drucksystem vorliegt und ein zusätzlicher Druck dem Drucksystem aufgeprägt wird. Eine eineindeutige Zuordnung von gemessenen Zustandsparametern der Steuereinheit und dem jeweils vorliegenden Systemdruck ist daher nicht gegeben, sondern es wird auf der Grundlage des zusätzlich aufgeprägten Druckwertes und der Reaktion einer Komponente der Steuereinheit auf den Systemdruck und damit beispielsweise auf den Ansprechdruck geschlossen. Auch Temperaturänderungen - und gegebenenfalls Änderungen des Aggregatzustandes - des Kühlmittels können während der Funktionstüchtigkeitstests eine Funktionsbeeinträchtigung und damit eine Veränderung der Zustandsparameter der Steuereinheit, insbesondere der Zustandsparameter der Sicherheitsventile, bedingen. Dies beeinträchtigt die Zuverlässigkeit der Funktionstüchtigkeitstests in einem hohen Maße.

Aufgabe der vorliegenden Erfindung ist es daher, eine Möglichkeit bereitzustellen, die Prüfung zumindest einer Komponente der Steuereinheit mit einem Druck-Weg-Umformer und einem Sicherheitsventil mit einem eindeutigen, reproduzierbaren Systemdruck durchzuführen und damit die Funktionstüchtigkeit einer Komponente der Steuereinheit vom Systemdruck eindeutig verifizieren zu können.

In Bezug auf das Verfahren wird die Aufgabe durch die Erfindung dadurch gelöst, dass nach der Entfernung des Kühlmittels aus zumindest einem Druckraum der Steuereinheit ein Fluid zur Erzeugung eines definierten Druckes in zumindest einem der Druckräume der Steuereinheit verwendet und zumindest ein Zustandsparameter der Steuereinheit in Abhängigkeit vom definierten Druck in mindestens einem der Druckräume der Steuereinheit ermittelt wird. Ein Fluid im Sinne der Erfindung kann jedes gasförmige und/oder flüssige Medium sein, mit dem ein genau definierter Systemdruck zumindest in einer Komponente der Steuereinheit hergestellt werden kann.

Im Sinne der Erfindung wird unter Funktionstüchtigkeit jede Form der direkten oder indirekten Überprüfung des bestimmungsgemäßen Funktionsverhaltens der Steuereinheit beziehungsweise einer entsprechenden Komponente der Steuereinheit verstanden, insbesondere die Überprüfung des Zustandes, des Ansprechverhaltens und des Druck- und Bewegungsverhaltens der Ventile, insbesondere der Sicherheitsventile, und/oder der zu- und/oder abführenden Druckleitungen und Steuerleitungen innerhalb der Steuereinheit. Wesentliche Funktionstüchtigkeitsprüfungen sind die Funktionsprüfung, die Einstellprüfung und/oder die Bewegungsprüfung eines Sicherheitsventils.

Das Verfahren ist bei druckbe- und/oder bei druckentlastenden Ventilen, insbesondere bei nach dem Federprinzip arbeitenden Steuer- und Sicherheitsventilen, einsetzbar.

Durch die Verwendung eines separaten Fluides zur Erzeugung eines definierten Druckes innerhalb der Steuereinheit entspricht vorteilhafterweise der in der Steuereinheit aufgebaute Systemdruck genau dem protokollierbaren Druck der Prüfeinheit. Insofern ergeben sich keine Unsicherheiten bezüglich des in der Steuereinheit anliegenden definierten Drucks, da der definierte Druck ausschließlich durch die Prüfeinheit bedingt und regelbar ist. Hierdurch lässt sich eine eineindeutige Zuordnung zwischen den in der Prüfeinheit genau erzeugten, definierten Drücken und den hierdurch bedingten Zustandsparametern der Steuereinheit bzw. von Komponenten der Steuereinheit ableiten und damit die Funktionstüchtigkeit der Steuereinheit bzw. der Komponente ermitteln.

Die Steuereinheit ist vorteilhafterweise so konzipiert, dass keine temperaturrelevanten Funktionsbeeinträchtigungen nach mehrmaligem Öffnen und Schließen und keine temperatur- und kühlmittelrelevanten Veränderungen des Ansprechdruckes die Funktionsweise der Steuereinheit und deren Komponenten durch die Nutzung eines externen Fluides zur Erzeugung eines definierten Drucks beeinträchtigen.

Insbesondere bei einem Anlagenstillsand oder auch bei einem abgesperrten Sicherheitsventil während des Anlagenbetriebes können die Funktionstüchtigkeitsprüfungen gemäß dem erfindungsgemäßen Verfahren durchgeführt werden. Unabhängig vom Systemdruck der Steuereinrichtung wird bei Prüfungen der Funktionstüchtigkeit zur Ermittlung des Ansprechdruckes des Druck-Weg-Umformers der hierfür erforderliche Druck in den relevanten Druckräumen der Steuereinheit durch ein Fluid mit definiertem Druck aufgebracht. Auf diese Weise wird das Rückschlagventil des Druck-Weg-Umformers oder des Steuerteils ausgelöst und bei Funktionsprüfungen ebenfalls das Sicherheitsventil betätigt. Neben dem Ansprechdruck können weitere Zustandsparameter wie beispielsweise Schließdruck, Steuerventil-Hub, Sicherheitsventil-Hub, Öffnungs- und Schließsicherheit, Öffnungs- und Schließtotzeiten, Schließdruckdifferenz sowie deren zeitlicher Verlauf mit dem jeweils vorherrschenden definierten Druck des Fluides in zumindest einem Druckraum und der Reaktion eines Ventils der Steuereinheit in Korrelation gesetzt und somit eindeutig bestimmt werden.

In einer vorteilhaften Ausgestaltung des Verfahrens ist vorgesehen, dass durch zumindest einen Messaufnehmer in der Steuereinheit in Abhängigkeit vom definierten Druck des Fluides in einem der Druckräume zumindest ein Zustandsparameter der Steuereinheit als Reaktion der Steuereinheit bzw. einer Komponente auf die Druckänderung in einem Druckraum ermittelt wird. Durch die Bereitstellung eines definierten Druckes des Fluides mit der gleichzeitigen Ermittlung von Zustandsparametern der Steuereinheit mit Hilfe des Messaufnehmers kann eine direkte Korrelation zwischen den ermittelten Zustandsparametern und dem zugehörigen definierten Druck des Fluides aufgestellt werden. Mit dieser eineindeutigen Zuordnung des definierten Druckes des Fluides zu den zugehörigen Zustandsparametern als Systemantwort der Steuereinheit können besser als bisher Rückschlüsse auf die Funktionstüchtigkeit der Steuereinheit geszogen werden.

Es wird als Vorteil angesehen, dass durch eine Prüfeinheit eine koordinierte Steuerung mittels eines definierten Druckes in einem Druckraum zumindest einer Komponente der Steuereinheit in Abhängigkeit vom definierten Druck des Fluides vorgenommen wird. Durch die koordinierte Aufbringung der definierten Drücke des Fluides in zumindest einer durch die Prüfeinheit selektiv auswählbaren Komponente der Steuereinheit, beispielsweise des Sicherheitsventils oder ein ausgewählter Druckraum des Druck-Weg-Umformers, kann nicht nur die generelle Funktionstüchtigkeit der gesamten Steuereinheit überprüft werden, sondern auch die Funktionstüchtigkeit einzelner Komponenten der Steuereinheit kontrolliert werden. Insbesondere die druckabhängige Überprüfung der Druckräume der Druck-Weg-Umformer, der Stellteile wie Rückschlagkegel und Sicherheitsventile mit Verbindung mit der gleichzeitigen Ermittlung von hierzu relevanten Zustandsparametern bietet die Möglichkeit, eine Überprüfung aller wesentlichen Komponenten der Steuereinheit selektiv und unabhängig voneinander durchzuführen.

Gleichzeitig können die im Rahmen der Funktionstüchtigkeitsprüfung ermittelten Zustandsparameter und die mit Druckaufnehmern gemessenen, definierten Drücke des Fluides zeitlich aufgelöst und in Abhängigkeit zueinander visualisiert werden. Nach der Protokollierung der definierten Drücke und der hierdurch bedingten Zustandsparameter als gemessene Reaktion der Steuereinheit kann mit der gleichzeitigen zeitlichen Dokumentation dieser Daten auch das zeitliche Verhalten der Zustandsparameter in Abhängigkeit von der durch die Prüfeinheit vorgegebenen definierten Drücke ermittelt und dargestellt werden. Die Erfindung bietet damit die Möglichkeit, nicht nur die reine Zuordnung eines definierten Druckes zu einem Zustandsparameter darzustellen, sondern auch aus dem zeitlichen Verhalten der ermittelten Daten, insbesondere der Zustandsparameter, Rückschlüsse auf die Funktionstüchtigkeit der Steuereinheit bzw. der geprüften Komponente zu ziehen. Auch beginnende Beeinträchtigungen und kurzzeitige Funktionsstörungen können hierdurch rechtzeitig ermittelt werden.

Die so visualisierten Daten werden dann von einem menschlichen Bediener ausgewertet und/oder durch ein regelbasiertes System, beispielsweise einem Expertensystem oder einem neuronalen Netz, automatisch analysiert, wobei im Falle einer detektierten kritischen Abweichung von der als notwendig definierten Funktionstüchtigkeit eine Fehlermeldung abgesetzt wird.

Das in einem separaten Vorratsbehälter unter hohem Druck stehende Fluid wird vorteilhafterweise durch die Prüfeinheit mittels der gezielten Ansteuerung eines Druckminderers - gegebenenfalls unter Nutzung eines Zusatzbehälters in der Prüfeinheit - auf den für die jeweilige Funktionstüchtigkeitsprüfung notwendigen definierten Druck abgesenkt. Dies bietet den Vorteil, dass nicht für die einzelnen Funktionstüchtigkeitsprüfungen mit unterschiedlichen definierten Drücken des Fluides jeweils eigenständige Druckbehälter mit entsprechendem definierten Drücken bereitgehalten werden müssen, sondern das lediglich ein Vorratsbehälter für die Durchführung der Funktionstüchtigkeitsprüfungen vorhanden sein muss. Des Weiteren ist hierdurch sichergestellt, dass unabhängig von Temperatur- und damit Druckschwankungen in dem separaten Druckbehälter der definierte Druck des Fuides durch die Ansteuerung des Druckminderers und des Zusatzbehälters in der Prüfeinheit erzeugt und durch die Prüfeinheit gesteuert wird. Der definierte Druck innerhalb der Prüfeinheit und damit in der durch die Prüfeinheit angesteuerten Komponente der Steuereinheit ist damit zu jedem Zeitpunkt exakt vorgeb-und messbar.

Den notwendigen Sicherheitsaspekten bei der Funktionstüchtigkeitsprüfung zumindest einer Komponente der Steuereinheit wird dadurch Rechnung getragen, dass die Prüfeinheit im Falle einer Störung oder eines Fehlers den definierten Druck des Fluides kontrolliert absenkt. Insbesondere bei der Betätigung eines eingebauten Not-Aus-Schalters wird die Impulsleitung druckentlastet, um ein unbeabsichtigtes Öffnen der Druckhalte-Sicherheitsventile zu verhindern. Daraus ergeben sich eine Schonung der zu prüfenden Druck-Weg-Umformer, Stellteile und Sicherheitsventile, kurze Prüfzeiten und nicht zuletzt hohe Sicherheitsstandards für das Bedienungspersonal.

Die Reproduzierbarkeit der ermittelten Zustandsparameter und gemessenen definierten Drücke wird dadurch gewährleistet, dass durch die Prüfeinheit vordefinierte Prüfabläufe zumindest einzelner Komponenten der Steuereinheit automatisch durchgeführt und protokolliert werden. Dies betrifft insbesondere die automatisierte Initialisierung der Funktionstüchtigkeitsprüfung, die Überwachung der Funktionstüchtigkeitsprüfung, vor allem der notwendigen definierten Drücke, und der Protokollierung der Zustandsparameter - auch im Hinblick auf die einwandfreie Funktion und den Test der Messaufnehmer, sowie den automatisierten Abschluss der Funktionstüchtigkeitsprüfung. Auch die zeitliche Dokumentation der definierten Drücke sowie der Zustandsparameter und deren -automatisierte - Auswertung entlastet einen menschlichen Bediener und ermöglicht in Verbindung mit computerbasierten Regelsystemen, beispielsweise einem Expertensystem, die Bereitstellung eines zweiten, gegebenenfalls redundanten automatischen Überwachungssystems.

Der definierte Druck wird vorteilhafterweise mittels eines Edelgases und/oder eines reaktionsträgen Gases, insbesondere Stickstoff, als Fluid erzeugt. Neben nutzbaren flüssigen Medien als Fluid im Sinne der Erfindung bieten sich insbesondere Edelgase und/oder reaktionsträge Gase an, da diese Gase in keiner bzw. nur in sehr geringer chemischer Wechselwirkung mit den Komponenten der Steuereinheit treten. Gleichzeitig sind diese Gase gut dekontaminierbar, was insbesondere in einem Reaktorkreislauf eines Kernkraftwerkes von Bedeutung ist.

Mit dem erfindungsgemäßen Verfahren ist es möglich, einen ventilschonenden Prüfvorgang durch einen abgesenkten Systemdruck vorzunehmen. Dadurch ist eine betriebsschonende Prüfung der Funktionstüchtigkeit der Steuereinheit bzw. einzelner Komponenten der Steuereinheit möglich, da nicht wie bisher ermüdungsrelevante Zyklen für die Prüfung der Funktionstüchtigkeit durchlaufen werden müssen. Der von der Prüfeinheit aufgebaute Druck entspricht dem für die jeweilige Funktionstüchtigkeitsprüfung notwendigen Druck in einem der Druckräume der Steuereinheit bzw. der ausgewählten Komponente der Steuereinheit, wobei der jeweils notwendige Druck für die geforderte Prüfung der Funktionstüchtigkeit beaufschlagt wird, wie beispielsweise der Ansprechdruck für die Prüfung des Sicherheitsventils als Komponente der Steuereinheit. Durch die gezielte Aufprägung eines definierten Drucks des Fluides in mindestens einem Druckraum der ausgewählten Komponenten der Steuereinheit werden die Reaktionszeiten der Steuereinheit deutlich minimiert. Der kontinuierliche, reproduzierbare Anstieg des definierten Fluiddruckes bei der Einstellprüfung führt durch die genaue Steuerung der gedrosselten Fluidzufuhr zu genauen und jederzeit reproduzierbaren Ergebnissen der Funktionstüchtigkeitsprüfung. Durch die Vorgabe eines definierten Abbruchkriteriums zur Vermeidung von unnötigen Öffnungs- und Schließvorgängen des Sicherheitsventils bei zu hoher Einstellung des Ansprechdruckes ist ein hoher Sicherheitsstand bei der Durchführung des erfindungsgemäßen Verfahrens gewährleistet. Durch den automatisierten Ablauf der Funktionstüchtigkeitsprüfung wird ein reproduzierbares Prüfverfahren mit entsprechenden reproduzierbaren Druckwerten und Messergebnissen bereitgestellt. Hierdurch ergibt sich die Möglichkeit, bereits vom Hersteller der Steuereinheit bzw. der Prüfeinheit ein qualifiziertes Messwerterfassungs- und Steuerungssystem bereitzustellen, das hohe sicherheitstechnische Anforderungen aufgrund von möglichen intensiven Vorabprüfungen der Hersteller erfüllen kann.

Hinsichtlich der Prüfeinheit wird die Aufgabe durch die Merkmale der Erfindung gemäß Anspruch 9 gelöst. Erfindungsgemäß ist eine Prüfeinheit für die Überprüfung der Funktionstüchtigkeit einer Steuereinheit mit einem Druck-Weg-Umformer dergestalt vorgesehen, dass nach der Entfernung des Kühlmittels aus zumindest einem Druckraum der Steuereinheit die Prüfeinheit ein Fluid zur Erzeugung eines definierten Druckes in zumindest einem der Druckräume der Steuereinheit verwendet und die Prüfeinheit zumindest einen Zustandsparameter der Steuereinheit in Abhängigkeit vom definierten Druck ermittelt.

Mit der Prüfeinheit können die relevanten Druckräume der zu prüfenden Druck-Weg-Umformer, Stellteile wie Entlastungskegel, Druckleitungen oder Sicherheitsventile der Steuereinheit abhängig von den Anforderungen der durchzuführenden Funktionstüchtigkeitsprüfung mit dem erforderlichen definierten Druck des Fluides, beispielsweise Stickstoff, beaufschlagt werden. Der Vorratsbehälter ist mit einem Druckminderer der Prüfeinheit verbunden, wobei die Prüfeinheit den definierten Druck mittels gezielter Ansteuerung des Druckminderers innerhalb des Zusatzbehälters in der Prüfeinheit und damit in der ebenfalls angesteuerten Komponente der Steuereinheit erzeugt. Hierzu wird der Druck über Druckminderer- gegebenenfalls mit Hilfe des Vorratsbehälters- von rund 300 bar auf einen definierten Druck in einem Druckbereich von 20 bar bis 220 bar reduziert. Die Bereitstellung des jeweils notwendigen definierten Drucks und das Auswählen der relevanten Druckleitungen, die zu den Druck-Weg-Umformern, den Stellteilen und den Sicherheitsventilen führen, geschieht mittels Handventilen und/oder magnetisch betätigten Hochdruckventilen, die im Rahmen des vollautomatischen Prüfablaufs durch die Prüfeinheit elektrisch betätigt und gesteuert werden.

In einer vorteilhaften Ausgestaltung der Prüfeinheit ist vorgesehen, dass die Prüfeinheit zumindest ein Druckregelventil zur automatischen Regelung des vorgebbaren Druckgradienten, ein Magnetventil zur Druckentlastung und einen Druckminderer zur definierten Erzeugung eines Druckes des Fluides, das aus einem mit der Prüfeinheit verbundenen Vorratsbehälter zugeführt wird, umfasst.

Zumindest ein Messaufnehmer ermittelt einen Zustandsparameter der Steuereinheit, wobei die Ein- und/oder Ausgangsverbindungsleitungen zwischen dem Messaufnehmer und der Prüfeinheit vorteilhafterweise spannungspotentialgetrennt sind. Die Ein-/Ausgänge sind deshalb potentialgetrennt ausgeführt, um elektrische Rückkopplungen in der Anlage zu vermeiden. Mit der Prüfeinheit können vorteilhafterweise 16 analoge Signale und 32 digitale Kanäle - bei einer Abtastrate von 1 kHz je Messkanal - verarbeitet werden.

Für eine geschützte und von der Steuereinheit unbeeinflusste Auswertung der protokollierten Zustandsparameter und/oder der protokollierten definierten Drücke des Fluides werden diese Daten an eine räumlich von der Steuereinheit getrennte Auswerteeinheit übertragen. Idealerweise werden die Daten an eine Auswerteeinheit mittels einer kabelbasierten Verbindung - beispielsweise über ein Ethernetkabel - oder per Funk übertragen, wobei im Sinne der Erfindung alle Datenprotokolle, wie beispielsweise ein Universal Mobile Telecommunications System (UMTS) - Funkstandard oder ein Netzwerkprotokoll, wie Hypertext Transfer Protocol (HTTP) verwendbar sind. Im Falle der Nutzung einer Rechnerarchitektur für die Verbindung der Komponenten untereinander sind alle Komponenten, wie Messaufnehmer, die Prüfeinheit oder die Steuereinheit, als Netzkomponenten adressierbar und mittels herkömmlicher Kommunikationsverbindungen, wie beispielsweise peer-to-peer-Verbindungen, so ansteuerbar. Im Falle der peer-to-peer-Kommunikationsverbindungen werden innerhalb des Netzwerkes freie Rechnerressourcen den ablaufenden Applikationen dynamisch zur Verfügung gestellt, so dass keine hierarchische Kommunikationsnetzstruktur notwendig ist.

Für einen einfachen Transport und zur Vermeidung von körperlich schweren Arbeiten bei der Aufstellung der Prüfeinheit sind Transportvorrichtungen, insbesondere Kranösen und/oder Rollen, an der Prüfeinheit angeordnet.

Mit der vorliegenden Erfindung werden die Prüfzeiten der Steuereinheit bzw. der Komponenten der Steuereinheit deutlich reduziert, so dass auch das Prüfpersonal einen geringeren Zeitbedarf als bisher für die Funktionsprüfungen aufwenden muss. Die Spannungspotentialtrennung der analogen und digitalen Ein- und Ausgänge gewährleistet, dass keine elektrischen Rückkopplungen oder Beeinflussungen der Anlageninstrumentierung oder der elektrischen Steuerung auftreten. Aufgrund der einfachen Konzeption der Prüfeinheit kann sowohl der Aufbau als auch der Umbau für unterschiedlichste Funktionstüchtigkeitsprüfungen einfach und schnell vom Prüfpersonal vorgenommen werden. Durch ein Meßwerterfassungs-und Steuerungssystem mit hohen Abtastraten der Druck- und Messwerte- in Verbindung mit einer eigenständigen rechnerbasierten Auswerteeinheit ist eine flexible Signaldarstellung und -dokumentation durch die vorliegende Erfindung bereitgestellt. Die Messwerterfassung und die elektronische Steuerung sind moderne, bewährte PC-Systeme mit Anwendersoftware, die in einem fahrbaren Gehäuse untergebracht und damit eine freie Positionierung der Auswerteeinheit relativ zur Steuereinheit erlauben.

Im Fehlerfall und bei Betätigung der eingebauten Not-Aus-Einrichtung wird die Prüfeinheit automatisch in Ruhestellung gebracht und die Impulsleitung druckentlastet, um ein unbeabsichtigtes Öffnen des Sicherheitsventils zu verhindern. Der Ablauf der Prüfungen wird durch das Prüfprogramm automatisiert gesteuert und gewährleistet somit reproduzierbare Prüfabläufe und Ergebnisse. Die ermittelten Prüfergebnisse und der Verlauf der aufgezeichneten Messwerte werden in einem Protokollausdruck dokumentiert und visuell und/oder elektronisch ausgewertet.

Es werden beispielsweise 16 analoge Kanäle und 32 digitale Kanäle für die Druckermittlung und die Messwerterfassung genutzt. Die analogen Kanäle verarbeiten Druck-, Temperatur- und Wegsignale. Die digitalen Kanäle verarbeiten Stellungsanzeigen der Komponenten der Steuereinheit mit jeweils einem Kanal für die offene und geschlossene Stellung. Die Signale sind bezüglich der elektrischen Spannung potentialgetrennt, damit elektronische Rückwirkungen und Beeinflussungen auf andere elektronische Systeme der Steuereinheit oder der gesamten Anlage ausgeschlossen sind.

Die vorliegende Erfindung kann in Form von Hardware, Software oder einer Kombination von Hardware und Software realisiert werden. Hierdurch ergibt sich die Möglichkeit einer freien Programmierung der Abläufe der Funktionstüchtigkeitsprüfung, so dass ein flexibel konfigurierbares Meßwerterfassungs- und Steuerungssystem durch die vorliegende Erfindung bereitgestellt wird. Des Weiteren können unterschiedliche Arten von Messaufnehmern und deren Verwendung im Rahmen der Funktionstüchtigkeitsprüfung durch die Software frei angepasst werden. Idealerweise werden hierbei verschiedene Funktionstüchtigkeitsprüfmodi für die Druckerzeugung und -messung, sowie vorteilhafte Betriebsabläufe bei der Messwertermittlung der Zustandsparameter der Komponenten der Steuereinheit, wie beispielsweise eine automatische Nullpunktkorrektur für die Messaufnehmer von Weg und Druck, bereitgestellt. Hierfür ist jede Art von System bzw. jede andere zum Ausführen des erfindungsgemäßen Verfahrens eingerichtete Vorrichtung geeignet. Eine typische Kombination von Hardware und Software könnte ein Universalcomputersystem mit einem Computerprogramm sein, welches in das Universalcomputersystem geladen und ausgeführt wird und die Prüfeinheit und die Steuereinheit so steuert, dass eine nach dem beschriebenen Verfahren erstellte Applikation ausgeführt wird. In einer weiteren Kombination von Hardware und Software kann beispielsweise zur Überprüfung der Funktionstüchtigkeit einer Komponente der Steuereinheit eine automatisierte Funktionstüchtigkeitsprüfung durchgeführt und die hierzu notwendigen Komponenten der Steuereinheit und der Prüfeinheit entsprechend durch die Software angesteuert werden. Gleiches gilt für die Auswerteeinheit der Messwerte, die als Kombination einer Hardware und einer Software eine automatisierte Messwerterfassung- gegebenenfalls mit eigenständig initiierbaren automatisierten Tests der Messaufnehmer - gewährleistet. Die vorliegende Erfindung kann auch in ein Computerprogrammprodukt integriert werden, welches alle Merkmale umfasst, die es zur Realisierung der hier beschriebenen computergestützten Verfahren befähigen, und welches nach dem Laden in ein Computersystem in der Lage ist, diese Verfahren auszuführen.

Unter den Begriffen Computerprogrammmittel, Computerprogramm und Computeranwendung ist im vorliegenden Zusammenhang jeder Ausdruck in einer beliebigen Computersprache, Code oder Notation eines Satzes von Anweisungen zu verstehen, welche ein Computersystem zur Datenverarbeitung und so zur Ausführung einer bestimmten Funktion befähigen. Das Computerprogrammmittel, das Computerprogramm bzw. die Computeranwendung ist entweder direkt oder nach einer Umwandlung in eine andere Sprache, Code, Notation oder durch die Darstellung in einer anderen materiellen Form auf dem Computersystem lauffähig.

Weitere vorteilhafte Ausführungsformen ergeben sich aus den Unteransprüchen. Die Erfindung wird nachfolgend anhand von Ausführungsbeispielen näher erläutert. Dabei zeigt beispielhaft die
- FIG. 1: eine schematische Darstellung der wichtigsten Komponenten der Prüfeinheit;
- FIG. 2: eine schematische Darstellung der Prüfeinheit mit Verbindungsleitungen zur Steuereinheit im Falle einer Einstellprüfung;
- FIG. 3: eine schematische Darstellung der Prüfeinheit mit Verbindungsleitungen zur Steuereinheit im Falle einer Funktionsprüfung;
- FIG. 4: eine schematische Darstellung der Prüfeinheit mit Verbindungsleitungen zur Steuereinheit im Falle einer Bewegungsprüfung.

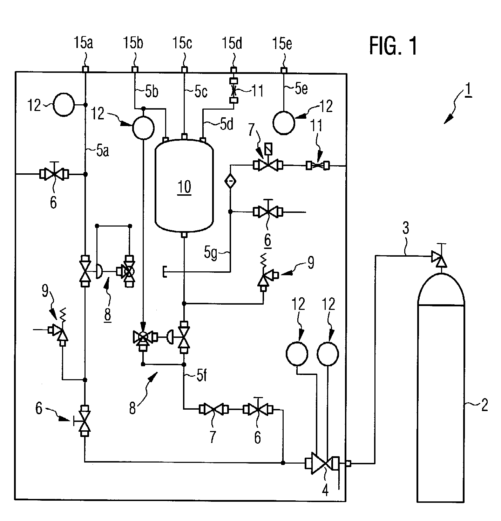

Die Figur FIG.1 zeigt eine schematische Darstellung der wichtigsten Komponenten der Prüfeinheit 1. Die Prüfeinheit 1 kann die Druckräume 18a bis 18f der zu prüfenden Steuereinheit 13 (nicht dargestellt) und der Komponenten 13,16a,16b,17,18a bis 18f,21,24,25,26 (nicht dargestellt) der Steuereinheit 13 abhängig von den Anforderungen der durchzuführenden Funktionstüchtigkeitsprüfung mit dem erforderlichen Stickstoffdruck als definierten Druck des Fluides beaufschlagen.

Eine Stickstoffflasche dient als separater Vorratsbehälter 2 mit gasförmigem Stickstoff als Fluid, wobei die Stickstoffflasche 2 über eine Verbindungsleitung 3 druckdicht mit der Prüfeinheit 1 verbunden ist. In der Prüfeinheit 1 wird der Flaschendruck des Vorratsbehälters 2 gemindert, von beispielsweise einem Druck von 300bar im Vorratsbehälter 2 auf 220bar innerhalb der Prüfeinheit 1. Zur Reduzierung des Druckes dient ein Druckminderer 4 in der Prüfeinheit 1. Die Bereitstellung der prüfungsanhängigen unterschiedlichen Drücke und die Auswahl der relevanten Leitungen 5a bis 5d, die zu den Ventilen 21 bzw. zu den Druckräumen 18a bis 18f der Steuereinheit 13 führen, wird mittels unterschiedlicher Stellungen von in der Prüfeinheit 1 den jeweiligen Leitungen 5a bis 5d zugeordneten Handventilen 6 und magnetisch betätigten Hochdruckventilen 7 gewährleistet, die im Rahmen des vollautomatischen Ablaufs der Funktionstüchtigkeitsprüfungen durch die Prüfeinheit 1 angesteuert werden. Die Leitungen 5a bis 5e sind einfach und druckdicht über die Anschlüsse 15a bis 15e mit entsprechend korrespondierenden Leitungen der Steuereinheit 13 verbindbar. Für die Steuerung der zeitlich veränderbaren definierten Drücken werden Druckregelventile 8 mit entsprechenden Reglern eingesetzt, wobei die Druckregelventile 8 die Aufprägung eines eindeutigen und reproduzierbaren Druckgradienten in den Leitungen 5a bis 5d und damit in der Steuereinheit 13 ermöglichen. Zum Schutz vor einer maximalen Druckbelastung der Prüfeinheit 1 sind Drucküberlastsicherheitsventil 9 in den Druckkreis der Prüfeinheit 1 integriert. Für die Überprüfung der Steuereinheit 13 im Rahmen einer Einstellprüfung oder einer Funktionsprüfung ist für die Vorhaltung eines definierten Druckes für die Funktionstüchtigkeitsprüfung in der Prüfeinheit 1 ein Zusatzbehälter 10 angeordnet, wobei der Zusatzbehälter 10 mit drei Leitungen 5b,5c,5d entweder direkt oder über eine Drossel 11 verbunden ist. Druckaufnehmer 12 in den Leitungen 5a bis 5e ermöglichen eine exakte und reproduzierbare Ermittlung der in der Prüfeinheit 1 gesteuerten und definierten Drücke in jeder Leitung 5a bis 5e.

Die Prüfeinheit 1 ermittelt mit den Druckaufnehmer 12 insbesondere den am Umformer anliegenden Druck p_{umf} der Leitung 5b für die Einstell- oder die Funktionsprüfung, den Druck p_{Bew} in der Leitung 5a bei einer Bewegungsprüfung, den Druck p_{RK} in der Leitung 5e bei einer Einstell- oder Funktionsprüfung, sowie den Systemdruck p_{sys} nach dem Druckminderer 4 und den Druck p_{N2} des Vorratsbehälters 2 vor dem Druckminderer 4. Die Steuerung der Ventile 7,8 erfolgt mittels eines rechnerbasierten Systems (nicht dargestellt), dass eine direkte elektronische Ansteuerung der Ventile 7,8 erlaubt.

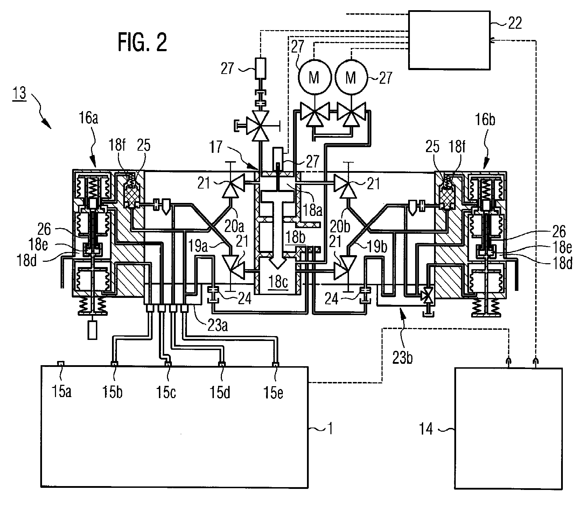

Die Figur FIG.2 zeigt eine schematische Darstellung der Prüfeinheit 1 mit Verbindungsleitungen an den Anschlüssen 15b bis 15e zur Steuereinheit 13 im Falle einer Einstellprüfung. Eine wesentliche Funktionstüchtigkeitsprüfung ist die Einstellprüfung zur Kontrolle des Ansprechdruckes und der Erstellung der charakteristischen Hub/Druck-Kurve der Druck-Weg-Umformer 16a, 16b. Die Einstellprüfung wird im kalten und drucklosen Zustand in der Steuereinheit 13 bei durch die Steuerventile 21 abgesperrten Steuer- und Druckentnahmebohrungen durchgeführt. Bei der Einstellprüfung werden mit Hilfe der Prüfeinheit 1 der originale Ansprechdruck und Schließdruck der Steuereinheit 13 bzw. von einzelnen Komponenten 13,16a,16b,17,18a bis 18f,21,24 - im vorliegenden Beispiel der Druck-Weg-Umformer 16a - dem System aufgeprägt, wobei die definierten Drücke des Fluides zur exakten Bestimmung des Ansprech- und Schließdrucks der Komponente dienen. Gemäß der vorliegenden Erfindung ist es nicht erforderlich, zur Ermittlung des Ansprech- und Schließdruckes einer Komponente 13,16a, 16b, 17,18a bis 18f, 21,24 der Steuereinheit 13 den Systemdruck durch Druckerhöhung und -reduzierung zu ermitteln. Ermüdungsrelevante Zyklen für Komponenten der Steuereinheit 13 während den Funktionstüchtigkeitsprüfungen werden somit vermieden. Dies stellt einen entscheidenden Beitrag zur Anlagenschonung dar.

Die Steuereinheit 13 weist zwei Druck-Weg-Umformer 16a, 16b - mit jeweils ansteuerbaren Druckräumen 18d bis 18f auf, die zur redundanten Steuerung eines Sicherheitsventils 17 mit jeweils ansteuerbaren Druckräumen 18a bis 18c dienen. Die Druck-Weg-Umformer 16a, 16b sind über jeweils eine Druckentnahmeleitung 19a, 19b und jeweils eine Steuerleitung 20a, 20b mit den Druckräumen 18a, 18b, 18c des Sicherheitsventils 17 verbunden. Zur Absperrung der Steuer- 20a, 20b und Druckentnahmeleitungen 19a, 19b dienen ansteuerbare Ventile 21. Die zu ermittelnden Messwerte des Sicherheitsventils 17 werden über ein Messsystem mit einem Unterverteiler 22 erfasst und an eine mit dem Unterverteiler 22 verbundenen Auswerteeinheit 14 übermittelt. Die Auswerteeinheit 14 ist ebenfalls zur Protokollierung der definierten Drücke der Prüfeinheit 1 mit der Prüfeinheit 1 über eine Messleitung verbunden.

Für die Einstellprüfung werden die Ventile 21 der Druckentnahmeleitung 19a,19b und der Steuerleitungen 20a,20b gesperrt, so dass das Sicherheitsventil 17 nicht angesteuert wird und eine selektive Prüfung der Druck-Weg-Umformer 16a,16b vorgenommen werden kann. Zur Einstellprüfung wird der an dem jeweiligen Druck-Weg-Umformer 16a,16b angeordnete Betriebsflansch 23b durch einen Prüfflansch 23a ausgetauscht. In dem gezeigten Ausführungsbeispiel der Figur FIG.2 sind die Zuleitungen zum linken Druck-Weg-Umformer 16a mit einem Prüfungsflansch 23a versehen und die Zuleitungen zu dem rechten Druck-Weg-Umformer 16b noch durch den ursprünglichen Betriebsflansch 23b geschützt. Der Zusatzbehälter 10 (nicht dargestellt) in der Prüfeinheit 1 wird mittels eines Magnetventils 7 (nicht dargestellt) und eines Druckregelventils 8 (nicht dargestellt) in der Druckleitung 5f (nicht dargestellt) auf 140 bar vorgespannt. Falls der Druck im Zusatzbehälter 10 zu hoch liegt, kann durch Öffnen des Magnetventils 7 in der Druckleitung 5g (nicht dargestellt) der Druck gesenkt werden. Dabei ist die automatische Nachregelung des Druckregelventils 8 in der Druckleitung 5f auf den eingestellten Druck zu beachten. Der Druck des mit der Prüfeinheit 1 verbundenen Vorratsbehälters 2 (nicht dargestellt) beträgt 300bar.
Der definierte Druck des Fluides - hier gasförmiger Stickstoff - wird, ausgehend von einem Basisdruck von nahezu 140 bar, durch Starten des Druckregelventils 8 in der Druckleitung 5f mit dem vorgegebenen konstanten, reproduzierbaren Druckgradienten auf den Ansprechdruck bzw. den eingestellten Sollwert angehoben.

Nach dem Öffnen des Druck-Weg-Umformers 16a,16b wird die Druckzufuhr durch das Druckregelventils 8 in der Druckleitung 5f unterbrochen und der definierte Druck über die Drossel 24 abgesenkt bis die Klauenfunktion der Druck-Weg-Umformer 16a,16b gegriffen und der Rückschlagkegel 25 geschlossen hat. Die Höhe des Drucks des Rückschlagkegels 25 ist über den am Anschluss 15e angeschlossenen Druckaufnehmer 12 (nicht dargestellt) messbar. Der Zusatzbehälter 10 wird durch Öffnen und Schließen des Magnetventils 7 in der Druckleitung 5g auf den Ausgangsdruck von 140 bar (P_{Umf}) abgesenkt. Die notwendigen Messdaten für die Bewertung der Funktionstüchtigkeit werden von der Auswerteeinheit 14 aufgezeichnet und protokolliert.

Der beispielhafte Ablauf einer Einstellprüfung für einen bzw. beide Druck-Weg-Umformer 16a,16b - insbesondere für das SIERION-Steuerventil des Unternehmens AREVA NP (ehemals FRAMATOME ANP) - beginnt mit der Erhöhung des Drucks von 0 bar auf 140 bar bei einem konstanten Volumen des Zusatzbehälters 10. Mit einer weiteren Druckerhöhung von 140 bar auf rund 197 bar wird mit dem Druckregelventil 8 in der Leitung 5f ein regelbarer Druckgradienten von 1 bar/sec bis 3 bar/sec exakt während der Einstellprüfung eingehalten. Der Druckgradient kann anlagenspezifisch festgelegt werden und ist über die Drucksteigerung von 140 bar bis zum Ansprechdruck der Steuerleitung 20a, 20b der Druck-Weg-Umformer 16a, 16b konstant. Bei einem Druck von ungefähr 193 bar öffnet die Drossel 11 in der Leitung 15d schlagartig für einen bestimmten Zeitraum, beispielsweise 5 msec. Trotz dieser Druckentlastung über die Drossel 11 der Leitung 15d erfolgt ein weiterer Druckanstieg bis zum Erreichen des maximalen Druckes bzw. bis zum Vorliegen eines Abbruchsignals. Anschließend wird der Druck über den Druck-Weg-Umformer 16a, 16b bis zum Schließdruck abgesenkt. Die Protokollierung der definierten Drücke und die Erfassung der Daten der Messaufnehmer 27 über den Unterverteiler 22 erfolgt in der Auswerteeinheit 14.

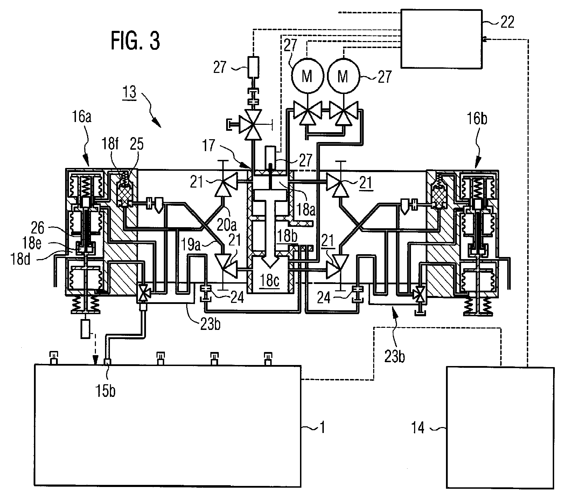

Die Figur FIG.3 zeigt eine schematische Darstellung der Prüfeinheit 1 mit Verbindungsleitungen zur Steuereinheit 13 im Falle einer Funktionsprüfung. Die Funktionsprüfung dient als Nachweis der Funktion jedes Druck-Weg-Umformers 16a, 16b durch die Ansteuerung mittels einer Steuerleitung 20a, 20b zu den Druckräumen 18a bis 18c des Sicherheitsventils 17. Für die Funktionsprüfung wird lediglich der Anschluss 15b der Prüfeinheit 1 benötigt und hierüber der definierte Druck des Fluides dem jeweiligen Druck-Weg-Umformer 16a, 16b aufgeprägt. In dem in der FIG.3 dargestellten Ausführungsbeispiel wird der linke Druck-Weg-Umformer 16a dergestalt geprüft, dass nur der linke Druck-Weg-Umformer 16a mit dem Sicherheitsventil 17 verbunden ist. Der redundante rechte Druck-Weg-Umformer 16b wird eigenständig geprüft und ist durch die Ventile 21 von der druckführenden Leitung am Anschluss 15b der Prüfeinheit 1 getrennt. Für die Funktionsprüfung ist ein Betriebsflansch 23b zu verwenden.

Die separate Kontrolle der Funktion der Druck-Weg-Umformer 16a, 16b bei der Ansteuerung des Sicherheitsventils 17 erfolgt bei 40 bar Primärkreisdruck.
Mit der Hilfe der Prüfeinheit 1 wird der Ansprechdruck und Schließdruck des Sicherheitsventils 17 durch die Ansteuerung der Druck-Weg-Umformer 16a, 16b ermittelt. Die Überprüfung erfolgt idealerweise mittels eines automatisierten Prüfprogramms.

Der definierte Druck des Fluides - hier gasförmiger Stickstoff - wird über das Druckregelventil 8 (nicht dargestellt) der Leitung 5f (nicht dargestellt) mit einem konstanten Druckgradienten angehoben, bis der Ansprechdruck des Sicherheitsventils erreicht ist. Weitere Abbruchkriterien sind das Erreichen des maximal zulässigen Drucks oder der Abbruch des Prüfprogramms durch den Bediener. Nach dem Öffnen des Sicherheitsventils 17 wird der Stickstoff als gasförmiges Fluid über das Magnetventil 7 und die Drossel 11 der Leitung 5g soweit abgesenkt, bis die Klauenfunktion des Druck-Weg-Umformers 16a gegriffen und Rückschlagkegel 25 geschlossen hat. Die Funktionsprüfung erfolgt mittels einer ersten Druckerhöhung von 0 bar auf einen Ausgangsdruck von140 bar. Danach erfolgt eine weitere Druckerhöhung von 140 bar auf 197 bar mit einem durch ein Druckregelventil 8 (nicht dargestellt) gesteuerten Druckgradienten von 5bar/sec bis zu 10 bar/sec.

Der genau definierte Enddruck wird für eine Zeitdauer 10 sec bis 12 sec gehalten. Im Ansprechdruckbereich öffnet ein Entlastungskegel 26 den der Rückschlagkegel 25 des Druck-Weg-Umformers 16a, wodurch das Sicherheitsventil 17 angesteuert wird. Die Druckabsenkung im Rahmen der Funktionsprüfung erfolgt über die Prüfeinheit 1 bis unter den Schließdruck des Steuerventils 16a, wobei beim Erreichen des Schließdrucks des Druck-Weg-Umformers 16a gleichzeitig das Sicherheitsventil 17 schließt.

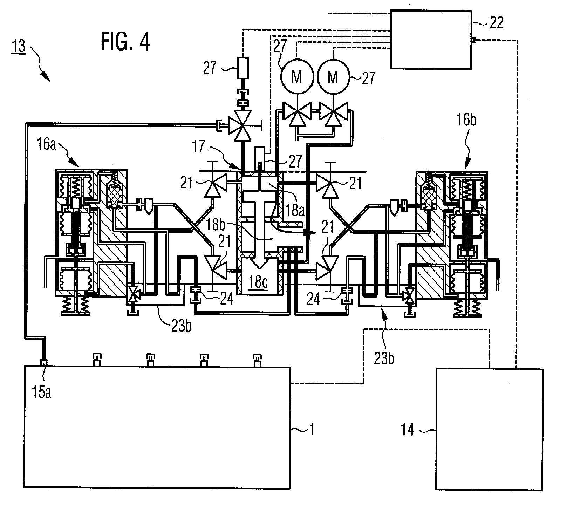

Die Figur FIG.4 zeigt eine schematische Darstellung der Prüfeinheit 1 mit Verbindungsleitungen zur Steuereinheit 13 im Falle einer Bewegungsprüfung.
Die Bewegungsprüfung dient der Kontrolle der Leichtgängigkeit beim Öffnungs-und Schließvorgang des Sicherheitsventils 17. Die Steuereinheit 13 ist nur über den ersten Anschluss 15a mit der ersten Leitung 5a der Prüfeinheit 1 verbunden. Die Ventile 21 zu den Steuer- 20a, 20b und Druckentnahmeleitungen 19a, 19b zu den Druck-Weg-Umformern 16a, 16b sind geschlossen. Die Bewegungsprüfung wird durch Beaufschlagung eines definierten Drucks des Fluides im oberen Druckraum 18a des Sicherheitsventils 17 durchgeführt. Der Unterverteiler 22 ist mit allen notwendigen Messaufnehmern 27 verbunden und leitet die Messdaten an die Auswerteeinheit 14 weiter. Die Prüfeineinheit 1 führt alle notwendigen Schalthandlungen für den Prüfablauf automatisch durch und protokolliert die dabei gewonnenen Messdaten. Für die Bewegungsprüfung ist es erforderlich, dass ein konstanter, definierter Druck des Fluides in den Druckräumen 18a des Sicherheitsventils 17 vorhanden ist. Dies wird gewährleistet, in dem das Druckregelventil 8 (nicht dargestellt) in der ersten Leitung 5a (nicht dargestellt) der Prüfeinheit 1 einen definierten Vordruck mittels des Druckminderers 4 (nicht dargestellt) erzeugt. Der Zusatzbehälter 10 (nicht dargestellt) in der Prüfeinheit 1 wird für die Bewegungsprüfung nicht benötigt. Eine definierte Entspannung des ersten Druckraumes 18a des Sicherheitsventils 17 erfolgt über die Kolbenringe und Spalten in den zweiten Druckraum 18b des Sicherheitsventils 17 durch Absperrung der ersten Leitung 5a der Prüfeinheit (durch den Pfeil im zweiten Druckraum 18b angedeutet). Die Druckmessung im ersten Druckraum 18a über die Zeit erfolgt mittels des Druckaufnehmers 12 P_{Bew} in der ersten Leitung 5a der Prüfeinheit 1.

Die Bewegungsprüfung erfolgt beispielsweise durch eine Druckerhöhung von 0 bar auf 1,5 bar bei konstantem Volumen von 1,2 I für den ersten Druckraum 18a. Mit der weiteren Druckerhöhung von 1,5 bar auf 3,0 bar vergrößert sich das Volumen des oberen Druckraums 18a von 1,2 l auf 2,0 l. Die nochmalige Druckerhöhung von 3 bar bis 6 bar erfolgt bei einem konstanten Volumen von 2 l des oberen Druckraums 18a des Sicherheitsventils 17. Anschließend erfolgt die Druckentlastung von 6 bar auf 0 bar bei gleichzeitiger Volumenabnahme des oberen Druckraums 18a auf 1,2 l über die Kolbenringleckage in den zweiten Druckraum 18b des Sicherheitsventils 17. Die automatisierte Prüfung endet, wenn ein Druck von 0 bar im ersten Druckraum 18a von der Auswerteeinheit 14 ermittelt wird.

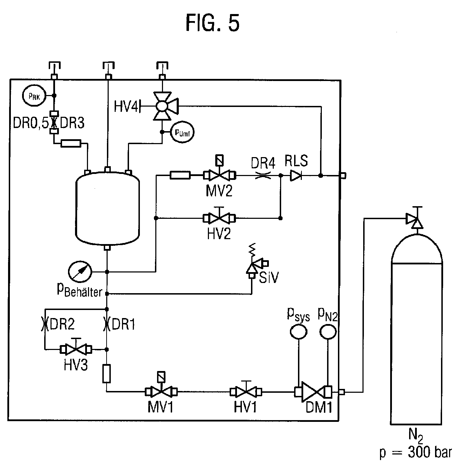

Eine weitere, im Detail leicht gegenüber der Ausführungsform gemäß FIG. 1 abgewandelte, vom Grundprinzip aber ganz analog aufgebaute Prüfeinrichtung für Sicherheitsventile und zugehörige Steuerventile sowie Einzelheiten der damit realisierbaren Prüfabläufe sind in FIG. 5 bis FIG. 13 dargestellt. Darin zeigen im Einzelnen:
- FIG. 5: ein schematisches Schaltbild der strömungsmechanischen Komponenten einer pneumatischen Steuereinheit zur Prüfung von Sicherheits- und Steuerventilen,

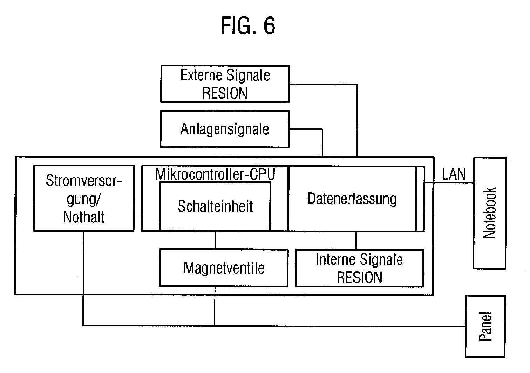

- FIG. 6: ein schematisches Blockdiagramm der elektronischen Komponenten einer an die Steuereinheit gemäß FIG. 5 angeschlossenen sowie mit einer Anzahl von Meßwertaufnehmern verbundenen Prozesssteuereinheit,

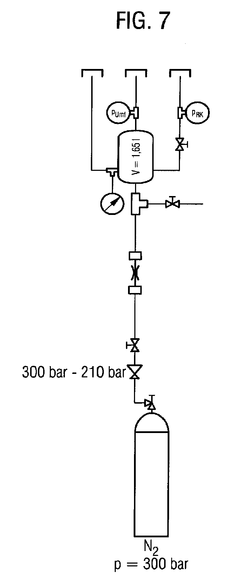

- FIG. 7: ein Schaltbild für den Aufbau eines Versuchsstandes für SIERION-Steuerventile,

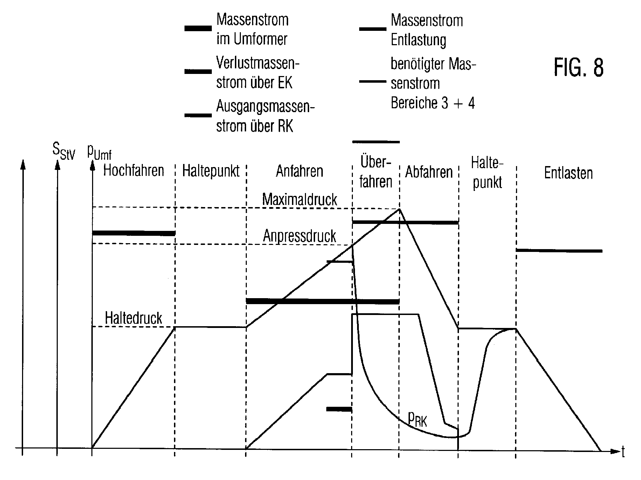

- FIG. 8: ein schematisches Diagramm (Prüfprofil) für den Stoff- und Signalfluß während einer Einstellprüfung eines Steuerventils, wobei die zugeordneten Steuerbefehle für die Magnetventile der pneumatischen Steuereinheit gemäß FIG. 5 ebenfalls im Diagramm kenntlich gemacht sind,

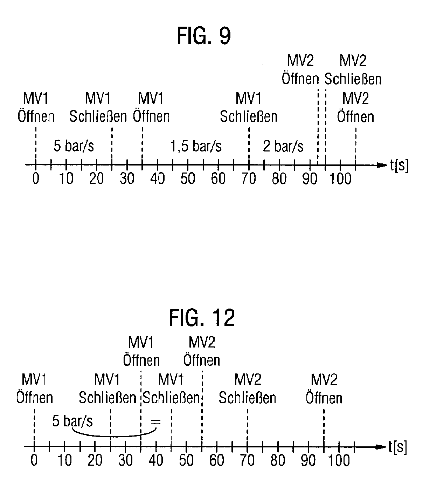

- FIG. 9: eine zur Einstellprüfung gemäß FIG. 8 korrespondierende Zeitachse, aus der die zeitliche Abfolge der Steuerbefehle für die Magnetventile hervorgeht,

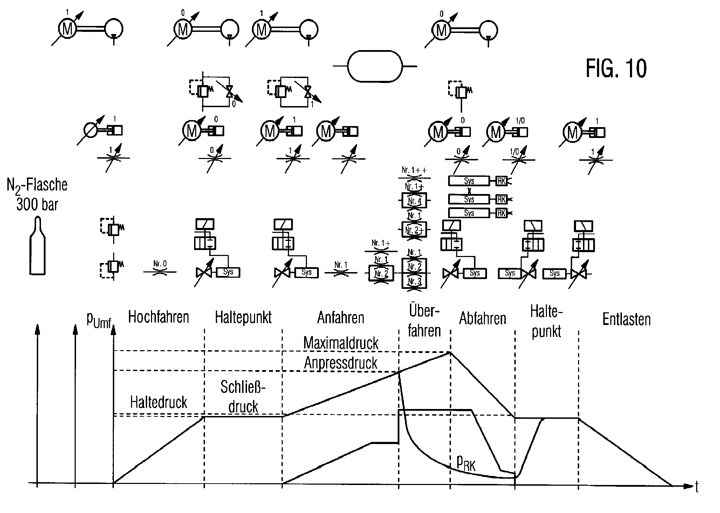

- FIG. 10: ein morphologisches Funktionsschema, aus dem die Schaltstellungen der wesentlichen Komponenten des Prüfsystems bei der Einstellprüfung gemäß FIG. 8 bzw. FIG. 9 ersichtlich sind,

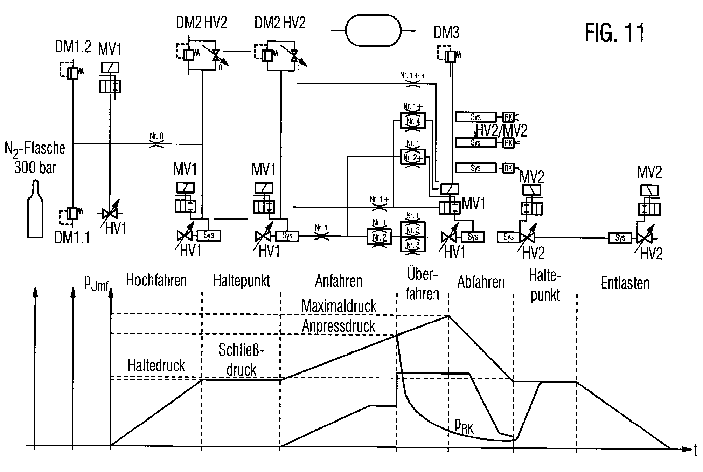

- FIG. 11: ein zur Einstellprüfung mit festem Drosselquerschnitt gehöriges morphologisches Funktionsschema,

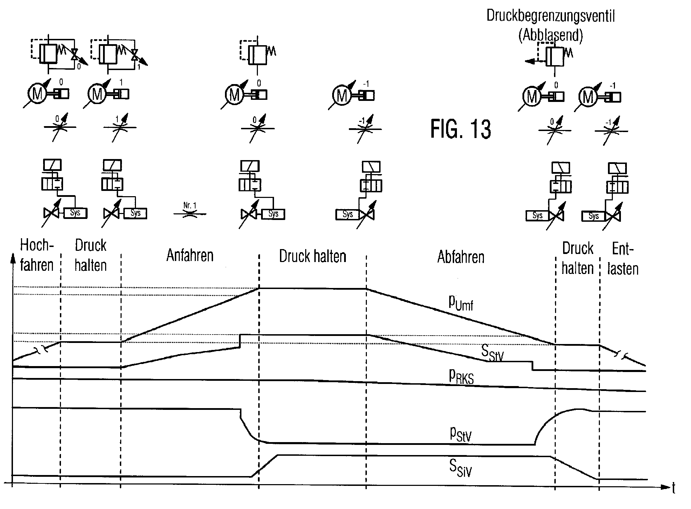

- FIG. 12: eine zu einer Funktionsprüfung eines Sicherheitsventils korrespondierende Zeitachse, aus der die zeitliche Abfolge von Steuerbefehlen für die Magnetventile der Steuereinheit gemäß FIG. 5 hervorgeht, und
- FIG. 13: ein zu einer Funktionsprüfung gemäß FIG. 12 korrespondierendes morphologisches Funktionsschema.

Ähnlich wie die Prüfeinheit gemäß FIG. 1 beruht das Prüfsystem gemäß FIG. 5 auf folgenden Grundüberlegungen:

In Kraftwerken und dabei insbesondere in Kernkraftwerken wird die Überdruckabsicherung der druckführenden Systeme durch eigenmediumbetätigte Sicherheitsventile realisiert. Für die Überdruckabsicherung des Primärkreises sind in der Regel gesteuerte eigenmediumbetätigte Sicherheitsventile eingesetzt. Sie arbeiten entweder nach dem Be- oder nach dem Entlastungsprinzip. Für beide Systeme gibt es verschiedene Typen von Steuerventilen.

Federbelastete Steuerventile arbeiten in der Regel nach dem Ruheprinzip, bei dem entweder eine vorgespannte Feder oder eine elektromagnetische Kraft gegen eine hydraulische Kraft wirkt, die sich aus dem Systemdruck des abzusichernden Kreislaufes und aus einer mit jenem beaufschlagten Querschnittsfläche (z.B. Ventilteller, Kolben oder Balg des Steuerventils) zusammensetzt. Dabei werden federbelastete Steuerventile dem Ruheprinzip zugeordnet. Bei Steuerventilen, bei denen eine gegen den Systemdruck wirkende Feder die erforderliche Schließkraft aufbringt, wird zur Verbesserung der Sitzdichtigkeit die Sitzpressung durch eine Zusatzbelastung erhöht, da bei steigendem Systemdruck die Flächenpressung am Sitz abnimmt.

Die Anforderungen aus dem Betrieb, sowie aus den im Rahmen von Umrüstmaßnahmen bei Druckhalter-Armaturen in Kernkraftwerken gesammelten Erfahrungen können jedoch nicht gänzlich von derartigen Steuerventilen, die als durchströmte Impulsventile konzipiert sind, erfüllt werden. Hieraus ergab sich die Notwendigkeit eines passiv arbeitenden Steuerventils mit einem nicht durchströmten Umformer, welches nunmehr als sogenanntes SIERION-Steuerventil zum Einsatz zur Verfügung steht, und das beispielsweise in der DE 196 28 610 C1 oder in der DE 198 24 494 C1 ausführlich beschrieben ist. Es wurde in umfangreichen Tests im Beisein von TÜV und von SVTI qualifiziert. Für eine detaillierte Beschreibung der einzelnen Komponenten eines derartigen SIERION-Steuerventils, ihre Bezeichnung und ihre Funktionsweise wird auf die genannten Druckschriften verwiesen.

Aus dem neuartigen Design und der teilweise völlig anderen Funktionsweise ergeben sich gegenüber den herkömmlichen Steuerventilen eine Vielzahl an Vorteilen, insbesondere:
- keine impulsseitige Durchströmung, um unabhängig vom Aggregatzustand des Mediums eine hohe Zuverlässigkeit zu gewährleisten
- keine temperaturrelevante Funktionsbeeinträchtigung nach mehrmaligem Öffnen
- keine temperatur- und medienrelevante Veränderung des Ansprechdrucks (Einstellung mit N₂ kalt entspricht Einstellung unter Betriebsbedingungen)
- Vermeidung elektromagnetischer und anderer Zusatzbelastungen durch steigende Flächenpressung an den Sitzen bei steigendem Systemdruck
- unabhängig von der Bauart (Entlastungs- oder Belastungsprinzip) der Sicherheitsventile und von deren Hersteller
- hohe reproduzierbare Ansprechgenauigkeit in Verbindung mit einer möglichst hohen Schließdruckdifferenz zur Gewährleistung einer definierten Druckentlastung.

Allerdings sind die bislang zur Funktionsprüfung von durchströmten Impulsventilen eingesetzten Prüfverfahren nicht für die Prüfung der neuartigen SIERION-Steuerventile geeignet. Sie haben außerdem den grundsätzlichen Nachteil, dass die Prüfung nur im Rahmen des Anlagenbetriebes erfolgen kann.

Eine zu lösende technische Aufgabe besteht daher darin, eine Vorrichtung und ein Verfahren zur Prüfung von Steuerventilen, insbesondere von federbelasteten Steuerventilen mit nicht durchströmtem Druck-Weg-Umformer, und zur Prüfung von durch derartige Steuerventile angesteuerten Sicherheitsventilen, insbesondere eigenmediumbetätigten Druckhalter-Sicherheitsventilen, anzugeben, so dass eine verlässliche und effektive Prüfung derartiger Ventilsysteme oder Sicherheitsarmaturen ermöglicht ist.

In Bezug auf die Prüfvorrichtung wird die Aufgabe gelöst durch eine mit einer elektronischen Prozesssteuerung verbundene pneumatische Steuereinheit, die an das zu prüfende Ventilsystem oder an dessen einzelne Komponenten anschließbar ist und die Mittel umfasst, um den für den jeweiligen Prüfvorgang erforderlichen oder zweckmäßigen zeitlichen Verlauf des Prüfdrucks zu erzeugen, insbesondere durch eine von der Prozesssteuerung gesteuerte oder geregelte Beaufschlagung des Ventilsystems oder seiner Komponenten mit einem unter Druck stehenden Prüffluid, vorzugsweise Stickstoff.

Eine derartige Prüfeinrichtung, im Folgenden auch kurz mit dem Namen RESION bezeichnet, ermöglicht insbesondere die Ansteuerung des SIERION-Steuerventils zu diversen Prüfzwecken während der Inbetriebsetzung und wiederkehrenden Prüfungen unter Simulation der (Kern-) Kraftwerks-Umgebungsbedingungen mit gleichzeitiger Datenerfassung und Auswertung.

Das heißt, die Prüfeinrichtung RESION ist für eigenmediumgesteuerte Sicherheitsventile mit SIERION-Steuerventilen vorgesehen, die zur Inbetriebsetzung und im Rahmen der regelmäßig wiederkehrenden Prüfungen kontrolliert werden müssen. Sie ist in der Lage, die Sicherheitsventile einschließlich ihrer Steuerstränge auf ihre sichere Funktion zu überprüfen und die Einstellwerte der zugehörigen Steuerventile zu kontrollieren und zu protokollieren. Ein Anschluss der Armatur an einen heißen Hochdruck-Versuchsloop ist nicht mehr erforderlich. Die Prüfung kann vor Ort oder im kalten Zustand durchgeführt werden.

Insbesondere kann auf diese Weise eine Einstellprüfung oder eine Funktionsprüfung vorgenommen werden: Unter einer Einstellprüfung versteht man dabei eine Prüfung zur Einstellung der Steuerventile und den Nachweis ihres Ansprechdrukkes und ihrer Funktion. Eine Funktionsprüfung beinhaltet den Nachweis der Funktion eines Sicherheitsventils durch die Ansteuerung mittels eines Steuerstrangs (vom Steuerventil über Steuerbohrung bis Steuerraum des Sicherheitsventils), also die Prüfung des kompletten Systems aus Sicherheitsventil und Steuerventil.

Die Prüfeinrichtung RESION kann, wie auch das Steuerventil der Bauart SIERION, unabhängig von der Funktionsweise der Sicherheitsventile (Entlastungs- oder Belastungsprinzip) eingesetzt werden. Sie basiert auf einer Prozesssteuerung mit passiv arbeitenden Komponenten der Strömungsmechanik (Behälter, Drossel, Drosselprinzip und Anordnung der Drosseln, Leitungen, Filter). Ihre Wirrungsweise lässt sich kurz wie folgt zusammen:

Unabhängig vom Systemdruck der Anlage wird bei Prüfungen zur Ermittlung des Ansprechdruckes von SIERION-Steuerventilen der hierfür erforderliche Druck im Umformer durch Stickstoff mit Hilfe der RESION-Steuereinheit aufgebracht. Auf diese Weise wird das Rückschlagventil des SIERION-Steuerventils ausgelöst und bei Funktionsprüfungen auch das Sicherheitsventil betätigt.

Neben dem Ansprechdruck werden weitere Daten wie Schließdruck, Steuerventil-Hub, Sicherheitsventil-Hub, Öffnungs- und Schließsicherheit, Öffnungs- und Schließtotzeiten, Schließdruckdifferenz sowie der zeitliche Verlauf ebenfalls automatisiert von der RESION-Prüfeinheit erfasst und sofort protokolliert.

Die Prüfeinrichtung RESION umfasst vorzugsweise ein PC-basiertes Messsystem, welches vorteilhafterweise folgende Komponenten aufweist:
- Rechner mit Prozessor, Betriebssystem und Anwendersoftware zur Bedienung sowie grafischer und nummerischer Anzeige der Messergebnisse
- Messwerteerfassung und elektronische Steuerung mit Schnittstellen zur pneumatischen Steuereinheit und zu den Anlagensignalen
- pneumatische Steuereinheit (Stickstoffversorgung) mit Aufnehmern für Steuerventilhub oder Pneumatikdruck
- Farbdrucker zur Protokollerstellung

Die Messwerterfassung und die elektronische Steuerung sind vorteilhafterweise moderne, bewährte PC-Systeme mit Anwendersoftware. Sie sind bevorzugt in einem fahrbaren Gehäuse untergebracht.

Mit dem System können beispielsweise 16 analoge Signale und 32 digitale Kanäle verarbeitet werden bei einer Abtastrate von z.B. 1 kHz je Messkanal. Die Ein-/Ausgänge sind potentialgetrennt ausgeführt, um Rückkoppelungen in die Anlage zu vermeiden. Vorteilhafterweise wird im Fehlerfall und bei Betätigung einer eingebauten Not-Aus-Einrichtung die pneumatische Steuereinheit der Prüfvorrichtung automatisch in Ruhestellung gebracht und die Impulsleitung druckentlastet, um ein unbeabsichtigtes Öffnen der Druckhalter-Steuerventile zu verhindern. Daraus ergeben sich eine Schonung der zu prüfenden Ventile und kurze Prüfzeiten und nicht zuletzt eine hohe Sicherheit für das Bedienungspersonal.

Der Ablauf der Prüfungen wird vorteilhafterweise durch das Prüfprogramm automatisiert gesteuert und gewährleistet somit reproduzierbare Prüfabläufe und Ergebnisse. Die ermittelten Prüfergebnisse und der Ablauf der aufgezeichneten Messwerte werden vorzugsweise in einem Protokollausdruck dokumentiert.

Mit der pneumatischen Steuereinheit können die zu prüfenden Ventile abhängig von den Anforderungen der durchzuführenden Prüfung mit dem erforderlichen Stickstoffdruck beaufschlagt werden. Sie umfasst dazu eine Stickstoffflasche mit zugehörigem Druckminderer und Schlauchanschluss. Der Flaschendruck von ca. 300 bar wird über Druckminderer auf einen Druckbereich von ca. 220 bar bis ca. 20 bar reduziert. Das Umschalten auf die Druckbereiche und auf die Leitungen, die zu den Ventilen führen, geschieht mittels Handventil und magnetisch betätigten Hochdruckventilen, die im Rahmen des voll automatischen Prüfablaufs von der Messwerterfassung mit der elektrischen Steuereinheit betätigt werden.

Die pneumatische Steuereinrichtung wird für die Bewegungsprüfung der Sicherheitsventile, die Einstellprüfung der SIERION-Steuerventile und für Funktionsprüfung der Steuerstränge der Sicherheitsventile verwendet. Sie ist zweckmäßigerweise derart konstruiert und ausgelegt, dass sie
- automatisiert angesteuert werden kann (Druckregelventile),
- definierte Abbruckriterien und Entlastung des Stickstoffdrucks zulässt (Magnetventile, Sicherheitsventil),
- das Aufbringen von definierten Prüfdrücken mit N₂ ermöglicht (Druckminderer),
- reproduzierbare Druckgradienten durch Druckregelventile aufbaut, und
- die Erfassung von Prüfdrücken und Funktionsabläufen ermöglicht (Druck- und Wegaufnehmer).

Vorteilhafterweise sind die druckführenden Komponenten der Steuereinrichtung überwiegend aus korrosionsbeständigen Materialien, z.B. aus Edelstahl oder Messing, aufgebaut und überdies leicht dekontaminierbar. Eine Kompaktbauweise mit möglichst geringem Gewicht impliziert eine gute Transportfähigkeit. Die einzelnen Komponenten sind vorteilhafterweise wartungsfreundlich angeordnet und ermöglichen eine einfache und übersichtliche Bedienung.

Die mit dem erfindungsgemäßen Prüfkonzept verbundenen Vorteile sind vor allem die Folgenden:
- Hauptventilschonender Prüfvorgang durch abgesenkten Systemdruck bei der Funktionsprüfung,
- Einstellprüfung der Steuerventile durch direktes Anfahren ohne Hubhilfe,
- die Einstellprüfung erfolgt in der Werkstatt oder im eingebauten Zustand bei kalter, druckloser Anlage,
- die Einstellprüfung während des Anfahrens bzw. des Abfahrens der Anlage entfällt
- bei vorhandenem Reservesteuerventilen erfolgt die Überholung nicht während der zeitkritischen Revisionszeit.

Weitere Vorteile sind:
- Anlagenschonung bei den Einstellprüfungen der Steuerventile (Vermeidung von ermüdungsrelevanten Zyklen für das System)
- Messwerterfassungs- und Steuerungssystem mit analogen und digitalen Messkanälen
- Hohe Abtastrate, Echtzeitdatenerfassung
- Automatisierter Prüfablauf und damit reproduzierbares Prüfverfahren und Ergebnisse. Die Kriterien, die zur Beurteilung der Funktion der Sicherheitsventile und ihrer Steuerventile notwendig sind, werden automatisiert ermittelt und dokumentiert.
- Die zur Bewertung der Funktion von Sicherheitsventil und Steuerventil notwendigen Kriterien (Öffnungs-, Schließtotzeit und Öffnungs-/ Schließsicherheit) werden automatisiert ausgewertet und im Protokoll eingetragen.
- Sofortige oder nachträgliche Auswertung von Messpunkten aus den Aufzeichnungen von analogen und/oder digitalen Signalverläufen (z.B. Ansteuerzeiten von Ventilen, Stellfedern usw.)
- Zeitersparnis sowohl beim Aufbau der Prüfeinrichtung als auch beim Umbau von einem Ventil zum anderen durch einfache, unverwechselbare Anschlüsse für E- und Leittechnik und robuste, problemlose Pneumatikkupplungen
- Geringer Zeitbedarf für das Prüfpersonal durch kurze Prüfzeiten, einfache Handhabung und Anordnung der Bedienelemente
- Automatische Nullpunktskorrektur für die Aufnehmer von Weg und Druck
- Potentialtrennung für alle analogen und digitalen Ein- und Ausgänge. Damit ist sichergestellt, dass keine Rückwirkungen oder Beeinflussungen auf die Anlageninstrumentierung entstehen.
- Keine Beschränkung bei der Verwendung von Aufnehmern durch softwareseitige Anpassung
- Wartungsfreundlichkeit

Die neu entwickelte pneumatische Steuereinheit, die gewissermaßen das (strömungs-) mechanische Herzstück der Prüfvorrichtung darstellt, ist vor allem durch folgende vorteilhafte Konstruktionsprinzipien gekennzeichnet:
- Der von der Steuereinheit verwendete Druck entspricht dem Ansprechdruck in der Anlage.
- Die Steuereinheit beaufschlagt den Umformer des SIERION-Steuerventils direkt mit dem Ansprechdruck des Sicherheitsventils.
- Minimierung der Reaktionszeit durch geringes Totvolumen
- Kontinuierlicher, reproduzierbarer Druckanstieg bei der Einstellprüfung durch gedrosselte Stickstoffzufuhr führt zu genauen Ergebnissen des Ansprechdrukkes.

Zusammenfassend bietet die neue Prüfeinrichtung umfassende Möglichkeiten zur Prüfung von Steuerventilen, insbesondere von federbelasteten Steuerventilen mit nicht durchströmtem Druck-Weg-Umformer, und von diesen zugeordneten Sicherheitsventilen, sowohl im Anlagenstillstand, z.B. in der Art eines Prüfstandbetriebs, als auch im Betriebszustand der Anlage, in welcher die das Steuerventil und das Sicherheitsventil umfassende Sicherheitsarmatur bestimmungsgemäß eingesetzt wird. Durch die Einführung einer geregelten oder gesteuerten strömungsmechanischen Prozessführung für den zeitlichen Druckverlauf im Prüfsystem können zweckorientierte Prüfzyklen durchlaufen und besonders aussagekräftige und verlässliche Prüfergebnisse abgeleitet werden.

Einzelheiten der möglichen Prüfabläufe ergeben sich aus FIG. 8 bis FIG. 13.

### Prüfabläufe:

Die Konzeption der Prüfabläufe dient der Festlegung der zeitlichen Abfolge von Steuerbefehlen. Prüfungsphasen sind in den angegebenen Profilen in Kreisen, charakteristische Punkte in Kästen gekennzeichnet. Die einzelnen Prüfungen können vom Bediener in jeder Stellung abgebrochen werden. Die Prüfeinrichtung fährt dabei in einen drucklosen Zustand ab.

### Einstellprüfung des Steuerventils:

Diese Prüfung dient zur Kontrolle des Ansprechdruckes und der Erstellung der charakteristischen Hub/Druck-Kurve des SIERION-Steuerventils.

Die Ansprechdruckprüfung soll im kalten und drucklosen Zustand der Anlage bei abgesperrten Steuer- und Druckentnahmebohrungen durchgeführt werden. Bei der Einstellprüfung soll mit Hilfe der Prüfeinrichtung RESION der originale Ansprechdruck und Schließdruck des SIERION-Steuerventils angefahren werden. Außerdem soll die charakteristische Hub/Druck-Funktion aufgenommen werden.

Bei diesem Verfahren ist es nicht erforderlich, zur Ermittlung des Ansprech- und Schließdruckes eines Steuerventils den Systemdruck der Anlage durch Druckerhöhung und -reduzierung zu ermitteln. Ermüdungsrelevante Zyklen für Komponenten während den Prüfungen werden somit vermieden. Dies stellt einen entscheidenden Beitrag zur Anlagenschonung dar.

Die SIERION-Steuerventile können auch auf einem separaten Prüfstand mit einem speziellen Adapter an Stelle des Handabsperrblockes eingestellt werden. Die Durchführung erfolgt sinngemäß der Einstellprüfung des Ansprechdruckes der SIERION-Steuerventile im kalten drucklosen Zustand.

Das Prüfprofil ist in FIG. 8 dargestellt. Zur Auswertung der Einstellprüfung werden die Signale des Drucks im Umformer, des Umformerhubes sowie des Drucks am Rückschlagkegel benötigt. Die Schaltzustände der Magnetventile können über der idealisierten Zeitachse nach FIG. 9 dargestellt werden.

Zur Zeit t=0 erfolgt am Punkt 1 der Prüfung die Freigabe des pneumatischen Aufbaus durch Öffnen des Absperrventils. Ein Druckanstieg von 5 bar/s wird im Lastenheft als Richtwert angegeben. Am Punkt 2 der Prüfung wird der Druckanstieg durch Schließen des Absperrventils beendet. Der Druck beträgt hier 130 bar. Dieser Wert kann in der Steuersoftware verändert werden. Mit Öffnen des Absperrventils am Punkt 3 beginnt sich der Stößel des Umformers proportional zum Druckanstieg zu bewegen. Der Gradient beträgt am Ansprechpunkt zwischen 1,5 bar/s und 3 bar/s. Bei Erreichen des Maximaldrucks am Punkt 6 von 190 bar wird die Medienzufuhr gestoppt. Daraufhin entlastet das Steuerventil SIERION selbsttätig über das Speichervolumen der Prüfvorrichtung RESION bis zum Schließdruck. Dieser liegt oberhalb 130 bar, weshalb das Entlastungsventil HV2 oder MV2 geöffnet und bei 130 bar wieder geschlossen werden muss. Liegt der Gradient während des Abfahrens aus technologischen Gründen unterhalb 2 bar/s, wird MV2 bereits bei 190 bar geöffnet. Am Punkt 8 entscheidet der Bediener, ob eine neue Prüfung stattfindet oder die Prüfeinrichtung druckfrei entlastet wird. Zur Fehlerkompensation wird dem Druckprofil der Steuerung ein Zeitprofil hinzugefügt. Die Zeiten werden nach Abschluss der Vorversuche festgelegt. Der Ansprechdruck wird gemessen, wenn der Druck Pᵣₖ sinkt. Der Schließdruck ist erreicht, wenn der Druck wieder beginnt, auf den aktuellen Umformerdruck P_{Umf} zu steigen.

Funktionsprüfung des Druckhalter-Sicherheitsventils mit dem SIERION-Steuerventil:

Das Prüfprofil ist in FIG. 13 dargestellt. Die Phasen 1 bis 3 der Funktionsprüfung und der Einstellprüfung sind gleich. Der Druckanstieg in Phase 3 wird mit 5 bar/s empfohlen. In Phase 4 der Funktionsprüfung mit Steuerventil SIERION wird der Druck konstant gehalten, was durch Schließen des Einlassventils MV1 erreicht wird. Da nur der Umformer von der Prüfeinrichtung mit Druck beaufschlagt wird, sinkt dieser nicht ab. Nach einer Öffnungsdauer des Sicherheitsventils von 10s muss der Schließdruck des Steuerventil SIERION durch Entlastung über MV2 erreicht sein. Dazu wird das Entlastungsventil MV2 geöffnet und bei 140 bar wieder geschlossen. Für das Abfahren existieren keine bindenden Angaben über den Druckabfall. Die Phasen 6 und 7 entsprechen der Einstellprüfung. Auch hier kann ein Zeitprofil hinterlegt werden. Die Zeitabläufe sind durch Versuche festzulegen.

Funktionsprüfung mit primärseitiger Druckentlastung (PDE) bzw. Magnetventilen:

Die Prüfungen bedürfen keiner Steuerung über die Prüfvorrichtung RESION. Die Ventile werden über das Leitsystem der Anlage geschaltet, wobei RESION nur zur Signalaufzeichnung und Prüfungsauswertung genutzt wird. Das Konzept dieser Prüfung beginnt mit der Anwahl der entsprechenden Prüfung im Softwaredialog. Die RESION Prüfeinrichtung befindet sich bereits im Druckhalter-Armaturenraum und ist betriebsbereit. In Abstimmung mit der Warte wird die Messung anschließend gestartet, und die Magnetsteuerventile bzw. Motor-PDE-Ventile werden über die Warte gesteuert.

### Bezugszeichenliste

- 1: Prüfeinheit
- 2: separater Vorratsbehälter
- 3: Verbindungsleitung
- 4: Druckminderer
- 5a bis 5g: Druckleitungen innerhalb der Prüfeinheit
- 6: Handventil
- 7: Magnetventil
- 8: Druckregelventil
- 9: Drucküberlastsicherheitsventil
- 10: Zusatzbehälter
- 11: Drossel
- 12: Druckaufnehmer
- 13: Steuereinheit
- 14: Auswerteeinheit
- 15a bis 15e: Anschlüsse zu den Druckleitungen der Prüfeinheit
- 16a, 16b: Druck-Weg-Umformer
- 17: Sicherheitsventil
- 18a bis 18f: ansteuerbare Druckräume der Steuereinheit
- 19a,19b: Druckentnahmeleitung
- 20a,20b: Steuerleitung
- 21: Ventil der Steuereinheit
- 22: Unterverteiler
- 23a: Prüfflansch
- 23b: Betriebsflansch
- 24: Drossel der Steuereinheit
- 25: Rückschlagkegel des Steuerventils
- 26: Entlastungskegel des Steuerventils
- 27: Messaufnehmer

## Patentansprüche

1. Verfahren zur Prüfung der Funktionstüchtigkeit einer Steuereinheit (13) mit mindestens einem Druck-Weg-Umformer (16a), wobei in dem Druck-Weg-Umformer (16a) eine Druckdifferenz zwischen zumindest zwei voneinander getrennten Druckräumen (18d, 18e) in eine Bewegung eines Stellkörpers (26) umsetzbar und mit dem Stellkörper (26) ein Steuerteil (25) zum Ansteuern eines Sicherheitsventils (17) mit zumindest einem Druckraum (18a) zur Aufnahme eines in einem Druckbehälter unter Druck stehenden Kühlmittels auslösbar ist, **dadurch gekennzeichnet, dass** nach der Entfernung des Kühlmittels aus zumindest einem Druckraum (18a bis 18f) der Steuereinheit (13) ein Fluid zur Erzeugung eines definierten Druckes in zumindest einem der Druckräume (18a bis 18f) verwendet und zumindest ein Zustandsparameter der Steuereinheit (13) in Abhängigkeit vom definierten Druck ermittelt wird.

2. Verfahren nach Anspruch 1, **dadurch gekennzeichnet, dass** durch zumindest einen Messaufnehmer (27) in der Steuereinheit (13) in Abhängigkeit vom definierten Druck des Fluides in mindestens einem der Druckräume (18a bis 18f) zumindest einen Zustandsparameter der Steuereinheit (13) ermittelt wird.

3. Verfahren nach einem der Ansprüche 1 oder 2, **dadurch gekennzeichnet, dass** durch eine Prüfeinheit (1) eine koordinierte Steuerung zumindest einer Komponente (13,16a, 16b, 17,18a bis 18f, 21,24,25,26) der Steuereinheit (13) in Abhängigkeit vom definierten Druck des Fluides in einem der Druckräume (18a bis 18f) der Steuereinheit (13) vorgenommen wird.

4. Verfahren nach einem der Ansprüche 1 bis 3, **dadurch gekennzeichnet, dass** die Zustandsparameter in Abhängigkeit vom definierten Druck des Fluides in mindestens einem der Druckräume (18a bis 18f) protokolliert und anschließend visualisiert werden.

5. Verfahren nach einem der Ansprüche 1 bis 4, **dadurch gekennzeichnet, dass** durch die Prüfeinheit (1) das in einem separaten Vorratsbehälter (2) befindliche, unter Druck stehende Fluid mittels eines Druckminderers (4) und eines Zusatzbehälters (10) auf einen vorgegebenen definierten Druck eingestellt und dieser definierte Druck einem der Druckräume (18a bis 18f) der Steuereinheit (13) aufgeprägt wird.

6. Verfahren nach einem der Ansprüche 1 bis 5, **dadurch gekennzeichnet, dass** durch die Prüfeinheit (1) bei einer Störung in der Prüfeinheit (1) und/oder Steuereinheit (13) der definierte Druck des Fluides kontrolliert abgesenkt wird.

7. Verfahren nach einem der Ansprüche 1 bis 6, **dadurch gekennzeichnet, dass** durch die Prüfeinheit (1) vordefinierte Prüfabläufe zumindest einzelner Komponenten (13,16a, 16b, 17,18a bis 18f,21,24) der Steuereinheit (13) automatisch durchgeführt und protokolliert werden.

8. Verfahren nach einem der Ansprüche 1 bis 7, **dadurch gekennzeichnet, dass** der definierte Druck mittels eines Edelgases und/oder eines reaktionsträgen Gases, insbesondere Stickstoff, als Fluid erzeugt wird.

9. Prüfeinheit (1) für die Überprüfung der Funktionstüchtigkeit einer Steuereinheit (13) mit mindestens einem Druck-Weg-Umformer (16a), wobei in dem Druck-Weg-Umformer (16a) eine Druckdifferenz zwischen zumindest zwei voneinander getrennten Druckräumen (18d,18e) in eine Bewegung eines Stellkörpers (26) umsetzbar und mit dem Stellkörper (26) ein Steuerteil (25) zum Ansteuern eines Sicherheitsventils (17) zur Aufnahme eines in einem Druckbehälter unter Druck stehenden Kühlmittels auslösbar ist, **dadurch gekennzeichnet, dass** nach der Entfernung des Kühlmittels aus zumindest einem der Druckräume (18a bis 18f) der Steuereinheit (13) die Prüfeinheit (1) ein Fluid zur Erzeugung eines definierten Druckes in zumindest einem der Druckräume (18a bis 18f) verwendet und die Prüfeinheit (1) zumindest einen Zustandsparameter mindestens einer Komponenten (13,16a,16b,17,18a bis 18f,21,24) der Steuereinheit (13) in Abhängigkeit vom definierten Druck ermittelt.

10. Prüfeinheit (1) nach Anspruch 9, **dadurch gekennzeichnet, dass** die Prüfeinheit (1) zumindest ein Druckregelventil (8) zur automatischen Regelung eines vorgebaren Druckgradienten, ein Magnetventil (7) zur Druckentlastung und einen Druckminderer (4) zur definierten Erzeugung eines Druckes des Fluides, dass aus einem mit der Prüfeinheit (1) verbundenen Vorratsbehälter (2) zugeführt wird, umfasst.

11. Prüfeinheit (1) nach einem der Ansprüche 9 oder 10, **dadurch gekennzeichnet, dass** zumindest ein Messaufnehmer (27) einen Zustandsparameter mindestens einer Komponente (13,16a,16b,17,18a bis 18f,21,24) der Steuereinheit (13) ermittelt, wobei die Ein- und/oder Ausgangsverbindungsleitungen zwischen dem Messaufnehmer (27) und der Prüfeinheit (1) spannungspotentialgetrennt sind.

12. Prüfeinheit (1) nach einem der Ansprüche 9 bis 11, **dadurch gekennzeichnet, dass** die protokollierten Zustandsparameter und/oder die protokollierten definierten Drücke des Fluides an eine Auswerteeinheit (14) übertragen werden.

13. Prüfeinheit (1) nach einem der Ansprüche 9 bis 12, **dadurch gekennzeichnet, dass** Transportvorrichtungen, insbesondere Kranösen und/oder Rollen, an der Prüfeinheit (1) angeordnet sind.

14. Prüfeinheit (1) nach einem der Ansprüche 9 bis 13, **dadurch gekennzeichnet, dass** ein Prüfungsflansch (23a) anstatt eines Betriebsflansches (23b) in der Steuereinheit (13) einsetzbar ist.

15. Datenverarbeitungsprogramm zum Ausführen in einem Datenverarbeitungssystem, wobei das Datenverarbeitungsprogramm Teile eines Quellcodes zum Durchführen des Verfahrens nach einem der vorigen Ansprüche 1 bis 8 umfasst, wenn das Programm in einem Computer läuft.

16. Computerprogrammprodukt, das in einem computerlesbaren Medium gespeichert ist und computerlesbare Programmmittel umfasst, mittels derer ein Computer veranlasst wird, ein Verfahren nach einem der vorigen Ansprüche 1 bis 8 durchzuführen, wenn das Programm in dem Computer läuft.

17. Prüfvorrichtung für ein Ventilsystem, insbesondere zur Prüfung von Steuerventilen, bevorzugt von federbelasteten Steuerventilen mit nicht durchströmtem Druck-Weg-Umformer, und zur Prüfung von durch derartige Steuerventile angesteuerten Sicherheitsventilen, bevorzugt eigenmediumbetätigten Druckhalter-Sicherheitsventilen, umfassend eine mit einer elektronischen Prozesssteuerung verbundene pneumatische Steuereinheit, die an das zu prüfende Ventilsystem oder an dessen einzelne Komponenten anschließbar ist und die Mittel umfasst, um den für den jeweiligen Prüfvorgang erforderlichen oder zweckmäßigen zeitlichen Verlauf des Prüfdrucks zu erzeugen, insbesondere durch eine von der Prozesssteuerung gesteuerte oder geregelte Beaufschlagung des Ventilsystems oder seiner Komponenten mit einem unter Druck stehenden Prüffluid, vorzugsweise Stickstoff.
